# FASCICULE DE BREVET EUROPEEN

(11) **EP 1 397 738 B1**
(45) Date de publication et mention de la délivrance du brevet: **11.01.2006**
(21) Numéro de dépôt: 02740836.8
(22) Date de dépôt: 28.05.2002
(51) Int. Cl.: G06F 3/033

(54) **PROCEDE DE GESTION D'UNE INTERFACE HOMME MACHINE DANS UN SYSTEME CARTOGRAPHIQUE AU MOINS PARTIELLEMENT EMBARQUE SUR AERONEF**
VERFAHREN ZUR VERWALTUNG EINER MENSCH-MASCHINESCHNITTSTELLE IN EINEM MINDESTENS TEILWEISE AM BORD EINES FLUGZEUGS BEFINDLICHEN KARTOGRAPHISCHEN SYSTEM
METHOD OF MANAGING A MAN/MACHINE INTERFACE IN A CARTOGRAPHIC SYSTEM THAT IS AT LEAST PARTIALLY LOCATED ON-BOARD AN AIRCRAFT

(30) Priorité: 19.06.2001 FR 0108039
(43) Date de publication de la demande: 17.03.2004
(73) Titulaire: Thales, 75008 Paris (FR)
(72) Inventeur: COPPOLINO, Erick, Thales Intellectual Property, 94117 Arcueil cédex (FR)
(74) Mandataire: Chaverneff, Vladimir
(86) Numéro de dépôt international: PCT/FR2002/001793
(87) Numéro de publication internationale: WO 2002/103507

(56) Documents cités:
- WO-A-00/79374
- WO-A-92/17850
- GB-A- 2 354 142
- US-A- 5 485 175
- US-A- 5 596 699
- US-A- 5 884 219
- US-A1- 2001 002 128

## Description

L'invention concerne le domaine des procédés de gestion d'une interface homme machine dans un système cartographique au moins partiellement embarqué sur aéronef. L'interface associe un désignateur et un écran d'aéronef. L'interface réalise la liaison entre un utilisateur du désignateur et le système cartographique qui est embarqué sur l'aéronef, au moins en partie. Le système cartographique comporte des informations structurées en arborescence sur plusieurs niveaux. Le procédé de gestion n'affiche simultanément sur l'écran qu'une partie des informations de l'arborescence pour des raisons de manque de place sur l'écran, la majeure partie de l'écran étant occupée la plupart du temps par une carte de terrain. Le but d'un système cartographique est de permettre au pilote ou à l'utilisateur si celui-ci est distinct du pilote, qu'on appellera globalement et indistinctement utilisateur dans la suite, de gérer l'environnement de l'aéronef dans les meilleures conditions opérationnelles possibles. La question clé pour l'utilisateur réside plus dans le fait de connaître l'environnement de l'aéronef que dans le simple fait de savoir où se trouve l'aéronef. Pour permettre à l'utilisateur de connaître l'environnement de l'aéronef dans de bonnes conditions opérationnelles, l'interface homme machine doit être rendue la plus ergonomique possible afin de permettre à l'utilisateur de maîtriser efficacement cet environnement et de pouvoir remplir sa mission opérationnelle.

Un problème spécifique au fonctionnement d'un système cartographique est de permettre à l'utilisateur d'accéder à un nombre élevé de commandes lui permettant d'influer sur l'affichage des informations cartographiques. Cet accès devant être rapide, à cause des conditions opérationnelles, et logique pour l'utilisateur, afin d'éviter que celui-ci se perde dans le système cartographique, une structure des informations en arborescence sur plusieurs niveaux est choisie. Le procédé de gestion de l'interface homme machine correspondante doit être efficace pour garantir cet accès rapide et logique aux informations pour l'utilisateur.

Plusieurs documents de l'art antérieur se rapportent à ce domaine technique. Ainsi, le brevet US 5 485 175 se rapporte à un menu dont les options affichées dans la liste de sélection comprennent un chemin à travers les niveaux hiérarchiques supérieurs du menu, le brevet US 5 596 699 montre un menu incluant des chemins vers les niveaux supérieurs qui sont affichés dans une zone centrale, la demande WO OO 79374 propose la navigation à travers des niveaux de cartes ordonnés de façon hiérarchique avec affichage du chemin suivi et accès direct aux noeuds de niveau supérieur, la demande WO 92 17850 divulgue un menu affiché avec un nombre de cases fixe le long de l'écran, Le brevet GB 2 354 142 propose de marquer le chemin sélectionné d'une couleur et les options disponibles d'une autre, enfin le brevet US 2001/002128 décrit la navigation en un clic dans un menu hiérarchique et la reconfiguration individualisée d'un menu de navigation pour automobile.

Selon l'art antérieur, il est également prévu un procédé de gestion de l'interface homme machine qui gère ladite interface à l'aide de menus déroulants de type « tirer et rouler » (« drag and roll » en terminologie anglo-saxonne). Ce type de procédé de gestion garantit un accès rapide et logique aux informations pour l'utilisateur. Un désignateur est un outil d'interface homme machine comportant au moins un bouton de validation sur lequel l'utilisateur peut appuyer et que l'utilisateur peut relâcher ainsi que des moyens de déplacement dans au moins deux directions d'un curseur sur l'écran d'aéronef. L'accès à l'information et plus précisément l'évolution de l'utilisateur dans l'arborescence et en particulier le passage d'un niveau de l'arborescence à un autre niveau de l'arborescence s'effectue pour l'utilisateur, dans ce type de procédé, par l'intermédiaire d'un mouvement de l'utilisateur avec appui prolongé de l'utilisateur sur le bouton pendant toute la durée du mouvement. En conditions opérationnelles, lorsque l'utilisateur se trouve dans l'aéronef, à cause des vibrations et des accélérations auxquelles est soumis l'utilisateur manipulant le désignateur, l'utilisateur a tendance à mal maîtriser ses mouvements ce qui peut l'amener à un endroit erroné dans l'arborescence et lui faire perdre du temps pour revenir à l'endroit voulu dans l'arborescence. Enfin, le brevet US 5 884 219 qui constitue l'état de la technique le plus proche de notre demande, décrit un système de navigation pour aéroplanes comprenant un menu hiérarchique disposé le long de l'écran. Ce document divulgue un procédé de gestion d'une interface homme machine associant un désignateur et un écran d'aéronef et réalisant la liaison entre un utilisateur du désignateur et un système cartographique comportant des informations structurées en arborescence sur plusieurs niveaux en affichant simultanément sur l'écran une partie seulement desdites informations, dans lequel chaque passage d'un niveau à un autre lors de l'évolution de l'utilisateur dans l'arborescence requiert au moins un clic, c'est-à-dire une pression sur un bouton du désignateur suivie d'un relâchement dudit bouton.

Le procédé de gestion d'interface homme machine selon l'invention, tout en conservant la structure des informations en arborescence sur plusieurs niveaux, ce qui permet à l'interface de garder son efficacité, et, lors de la manipulation du désignateur par l'utilisateur, pour passer d'un niveau à un autre dans l'arborescence, l'appui prolongé par un simple clic, c'est-à-dire une pression sur le ou l'un des boutons du désignateur suivie d'un relâchement dudit bouton peut, de plus, reconfigurer automatiquement l'arborescence en fonction de la mission de l'utilisateur, ladite reconfiguration rapprochant de l'origine de l'arborescence les informations particulièrement pertinentes pour ladite mission. Ceci confère une grande souplesse à l'arborescence.

Selon l'invention, il est prévu un procédé de gestion d'une interface homme machine laquelle interface associe un désignateur et un écran d'aéronef et réalise la liaison entre un utilisateur du désignateur et un système cartographique comportant des informations structurées en arborescence sur plusieurs niveaux en affichant simultanément sur l'écran une partie seulement desdites informations, chaque passage d'un niveau à un autre lors de l'évolution de l'utilisateur dans l'arborescence requiert au moins un clic, c'est-à-dire une pression sur un bouton du désignateur suivie d'un relâchement dudit bouton, caractérisé en ce que le procédé de gestion selon l'invention peut reconfigurer automatiquement l'arborescence en fonction de la mission de l'utilisateur, ladite reconfiguration rapprochant de l'origine de l'arborescence les informations particulièrement pertinentes pour ladite mission.

Ainsi chaque passage d'un niveau à l'autre, lors de l'évolution de l'utilisateur dans l'arborescence, est maîtrisé par l'utilisateur ; le risque, important en conditions opérationnelles, de saut intempestif à un endroit non désiré dans l'arborescence à cause d'un faux mouvement de l'utilisateur dans sa manipulation du désignateur, est très fortement diminué.

L'évolution de l'utilisateur dans l'arborescence, qui se réalise par des passages d'un niveau à un autre niveau, permettant ainsi à l'utilisateur de parcourir l'arborescence, s'effectue par une succession de clics. L'arborescence comporte une origine à partir de laquelle s'étendent plusieurs branches, la progression le long d'une branche pouvant s'effectuer niveau par niveau et ceci jusqu'à atteindre une extrémité de branche encore appelée feuille.

De préférence, lors d'une l'évolution descendante de l'utilisateur dans l'arborescence, c'est-à-dire s'éloignant de l'origine de l'arborescence et par conséquent allant vers une extrémité de branche, le passage direct d'un niveau donné à un autre niveau non contigu au niveau donné est impossible, l'évolution s'effectuant alors pas à pas, et le passage d'un niveau donné à un autre niveau contigu au niveau donné requiert un seul clic. L'évolution descendante s'effectue alors niveau par niveau, et elle est réalisée clic par clic. Le déroulement du menu est alors un peu lent mais présente une grande sécurité au niveau des manipulations du désignateur par l'utilisateur.

De préférence, le procédé maintient préférentiellement l'affichage de tous les niveaux successifs de la branche menant de l'origine de l'arborescence à l'endroit de l'arborescence où se trouve l'utilisateur et le procédé permet à l'utilisateur de revenir à n'importe quel niveau voulu parmi les niveaux maintenus affichés en un seul clic sur ledit niveau voulu. Ainsi, cette matérialisation de l'historique du parcours descendant de l'arborescence et le retour direct possible à tout niveau situé entre l'origine de l'arborescence et l'endroit courant de l'arborescence, c'est-à-dire l'endroit où se trouve l'utilisateur, permet à l'utilisateur de bien rentabiliser le nombre de clics effectué. Le procédé ne maintient avantageusement l'affichage des niveaux successifs que de la seule branche menant de l'origine de l'arborescence à l'endroit de l'arborescence où se trouve l'utilisateur. Afficher ou maintenir l'affichage d'autres branches présente peu d'intérêt et devient vite gourmand en place disponible sur l'écran d'aéronef.

Le procédé alloue, sur l'écran, pour l'affichage des informations de l'arborescence, un espace de taille préférentiellement invariable au cours de l'évolution de l'utilisateur dans l'arborescence. Toutes les cases du dit espace alloué ne sont cependant pas remplies à chaque étape de l'évolution de l'utilisateur dans l'arborescence. L'espace confiné correspond à un maximum de cases pouvant être remplies par les informations d'une arborescence donnée. Cette allocation d'un espace confiné pour l'affichage des informations de l'arborescence permet de conserver la majorité de la place disponible sur l'écran d'aéronef pour l'affichage de la carte de terrain proprement dite, au contraire de l'art antérieur où l'affichage des différentes parties successives du menu déroulant de type « drag and roll » recouvre au fur et à mesure la carte de terrain qui est affichée sur l'écran ce qui est particulièrement gênant lorsque par exemple les informations affichées par le procédé permettent à l'utilisateur de placer des objets sur la carte affichée à l'écran. Toutefois, comme dans l'art antérieur, certaines fenêtres de tâches (dites « pop-up » en terminologie anglo-saxonne) peuvent s'afficher au-dessus de la carte et/ou de l'espace alloué à l'affichage des informations de l'arborescence. De plus, lorsque l'utilisateur cesse d'évoluer dans l'arborescence, par exemple lorsqu'il quitte l'arborescence, l'espace alloué peut être réaffecté, par exemple à une autre arborescence dans laquelle l'utilisateur irait ensuite évoluer après avoir quitté la précédente. Dans l'espace alloué, avantageusement, le procédé ne peut afficher les informations que sous la forme d'un tableau préférentiellement monodimensionnel de plusieurs cases de taille identique, chaque case ne comportant qu'une seule information désignable, c'est-à-dire pouvant être sélectionnée par l'utilisateur par l'intermédiaire d'une manipulation du désignateur. Le caractère préférentiellement monodimensionnel du tableau le rend particulièrement compact et commode pour l'utilisateur qui le visualise d'un seul coup d'oeil. Le nombre maximal de cases du tableau reste préférentiellement inférieur ou égal à vingt, même pour une arborescence pouvant contenir quelques centaines d'informations.

Lors du passage à un niveau donné, si le nombre d'informations correspondant au niveau donné est trop important pour être affiché dans l'espace alloué, alors le procédé n'affiche préférentiellement qu'une partie des dites informations, ladite partie étant encadrée par les flèches d'un ascenseur, l'affichage de chacune des flèches requérant une case, les flèches permettant à l'utilisateur de faire défiler entre lesdites flèches l'intégralité des dites informations. La flèche orientée vers le haut permet de faire défiler les informations du haut vers le bas tandis que la flèche orientée vers le bas permet de faire défiler les informations du bas vers le haut. La présence d'un ou de plusieurs ascenseurs permet de conserver un espace alloué de petite dimension même pour une arborescence complexe dont certaines branches sont très longues. Cependant les ascenseurs diminuent pour l'utilisateur la lisibilité immédiate des informations de l'arborescence qui sont affichées. Il est par conséquent intéressant de limiter au maximum le nombre d'ascenseurs utilisé. Pour cela, une structure de l'arborescence des informations, dans laquelle le niveau le plus proche de l'origine de l'arborescence comporte plus d'informations à afficher que chacun des niveaux les plus lointains de l'origine de l'arborescence affichant des extrémités de branches, est particulièrement avantageuse. L'arborescence étant préférentiellement de forme pyramidale, ladite structure permet en fait d'égaliser dans une certaine mesure la distance entre l'origine de l'arborescence d'une part et les extrémités des différentes branches d'autre part.

Afin de rendre plus rapide la compréhension par l'utilisateur des informations affichées, chaque niveau donné d'une branche qui comporte au moins un autre niveau plus éloigné de l'origine de l'arborescence que le niveau donné est préférentiellement affiché à l'aide d'une marque spécifique le distinguant des niveaux situés à l'extrémité d'une branche. Ainsi, l'utilisateur comprend immédiatement qu'une case comportant une marque spécifique masque des informations plus précises situées plus bas dans l'arborescence et que l'information contenue dans ladite case peut encore être affinée par simple clic sur ladite case. Cette marque spécifique est par exemple un petit triangle qui est situé dans la case et dont la pointe est dirigée vers la portion de l'espace alloué où vont s'afficher les informations plus précises en cas de clic sur ladite case.

Selon l'invention, le procédé peut reconfigurer automatiquement l'arborescence en fonction de la mission de l'utilisateur, ladite reconfiguration rapprochant de l'origine de l'arborescence les informations particulièrement pertinentes pour ladite mission. Ceci confère une grande souplesse à l'arborescence. Par exemple, supposons que le long d'une branche donnée, l'un des niveaux corresponde à « cibles » et que les niveaux immédiatement inférieurs soient « véhicules à roues », « véhicules à chenilles », « cibles fixes » et « objets non identifiés » ; dans cette arborescence, on ne pourra aller de l'origine de l'arborescence à l'une de ces catégories de cibles qu'en passant par « cibles » et pour accéder à un type de char à roues, il faudra passer ensuite par « véhicules à roues ». Dans le cas d'une mission spéciale « char à roues », tous les types de char à roues seront par exemple placés au niveau juste inférieur à celui de « cibles », c'est-à-dire au même niveau que « véhicules à chenilles », « cibles fixes » et « objets non identifiés » ; la case « véhicules à roues » devenue inutile pourra quant à elle être supprimée. Ainsi, lors d'une mission spéciale « char à roues », l'utilisateur accède plus rapidement aux cibles de type char à roues qu'aux autres types cibles comme par exemple les cibles de type véhicule à chenilles, ce qui est intéressant car l'utilisateur aura alors plus souvent besoin des cibles de type « char à roues » que des autres types de cible.

Parmi les fonctionnalités cartographiques préférentielles offertes par le procédé selon l'invention à l'utilisateur, on trouve la fonctionnalité permettant de montrer des objets sur la carte affichée à l'écran et la fonctionnalité de cacher des objets sur la carte affichée à l'écran.

Dans une option préférentielle, différentes informations qui sont chacune affichée dans une case et qui sont désignables simultanément sont affichées d'une manière à la fois identique entre elles et spécifique des autres. Ces informations appartiennent alors toutes au même niveau de l'arborescence. Ces informations sont par exemple représentées dans une même couleur ou bien dans une même teinte, par exemple claire ou foncée, d'une couleur lorsque toutes les cases sont représentées de la même couleur.

Le désignateur associé à l'écran par le procédé est de préférence un levier de commande ou une boule roulante ou une surface tactile. Un désignateur du type souris présente l'inconvénient de ne pas être solidaire du cockpit de l'aéronef ; son emploi nécessiterait donc des aménagements spécifiques dans ce sens. Les flèches du clavier accompagnées de la touche « entrée » constitueraient un désignateur acceptable mais elles ne sont en général pas à portée de main de l'utilisateur dans le cockpit de l'aéronef. D'autres désignateurs plus sophistiqués permettant un déplacement sur la carte selon trois dimensions sont possibles, ainsi que des désignateurs dits à « quatre dimensions » ou à « cinq dimensions » selon qu'en plus des trois dimensions pour la direction de déplacement de l'aéronef, ils comportent également une ou deux dimensions, site et/ou azimut, dans une direction de regard comme la direction d'un viseur optique monté sur l'aéronef par exemple.

L'utilisation conjointe pour le procédé de gestion de l'interface homme machine selon l'invention des trois caractéristiques suivantes, premièrement au moins un clic requis pour chaque passage d'un niveau à un autre, deuxièmement la possibilité d'une remontée en un seul clic en tout point de l'historique matérialisé de l'arborescence, troisièmement un espace allouée de taille invariable, permet au procédé selon l'invention de présenter une très bonne ergonomie alliant la sécurité au niveau de l'évolution de l'utilisateur dans l'arborescence à la rentabilité du nombre de clics nécessaires à ladite évolution, tout en diminuant la place occupée sur l'écran d'aéronef pour l'affichage des informations par le procédé selon l'invention.

L'invention sera mieux comprise et d'autres particularités et avantages apparaîtront à l'aide de la description ci-après et des dessins joints, donnés à titre d'exemples, où :
- la figure 1A représente schématiquement une portion d'un exemple d'arborescence dans un système cartographique ;
- les figures 1B à 1D représentent schématiquement des exemples de tableaux affichés par le procédé de gestion selon l'invention ;
- les figures 2, 3A et 3B représentent des exemples d'allocation d'espaces confinés à des arborescences ;
- la figure 4 représente, à titre d'illustration, un exemple d'affichage réel sur un écran d'aéronef.

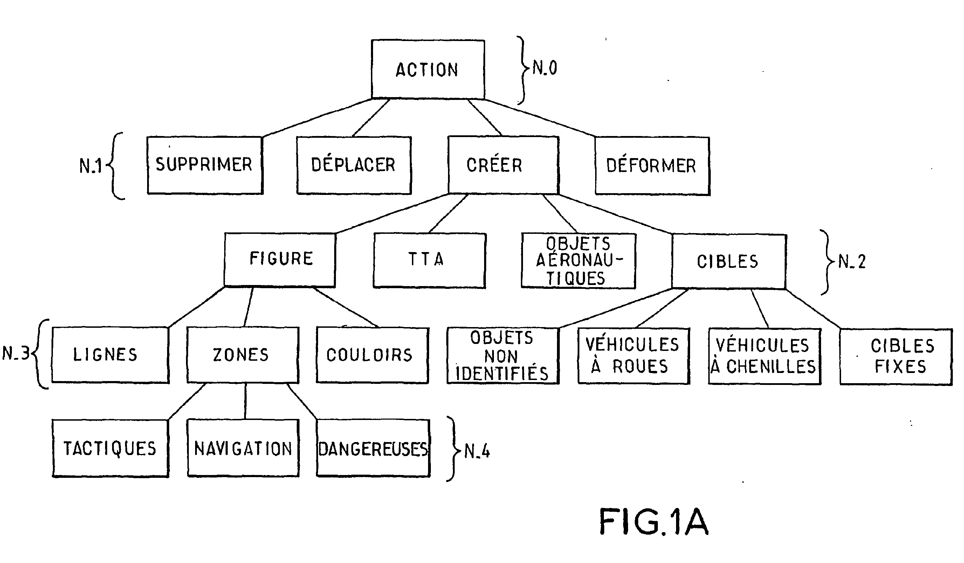

La figure 1A représente schématiquement une portion d'un exemple d'arborescence dans un système cartographique. Chaque case représente une information de l'arborescence, par exemple l'information « Créer ». Les traits reliant les cases matérialisent la structure de l'arborescence. La case « Action » est l'origine de l'arborescence. Son niveau est le niveau N0. Le niveau le plus proche de l'origine de l'arborescence est le niveau N-1 et comporte les cases « Créer », « Supprimer », « Déplacer », « Déformer », etc...Quoique l'arborescence en comporte plusieurs, un seul niveau N-2 est représenté, il est rattaché à la case « Créer », et comporte les cases « Figure », « TTA », « Cibles », « Objets aéronautiques ». Deux niveaux N-3 sont représentés, l'un rattaché à la case « Figure » et comportant les cases « Zones », « Lignes », « Couloirs », l'autre rattaché à la case « Cibles » et comportant les cases « Objets non identifiés », « Véhicules à roues », « Véhicules à chenille », « Cibles fixes ». Un seul niveau N-4 est représenté, il est rattaché à la case « Zones » et comporte les cases « Tactiques », « Navigation », « Dangereusement ». Le niveau le plus proche N-1 comporte quatre cases tandis que le seul niveau N-4 représenté, lequel ne comporte que des extrémités de branches, ne comporte que trois cases. L'utilisateur, peut par exemple placer des objets sur la carte à l'aide de la case « Créer », tandis qu'il peut les enlever de la carte à l'aide de la case « Supprimer ».

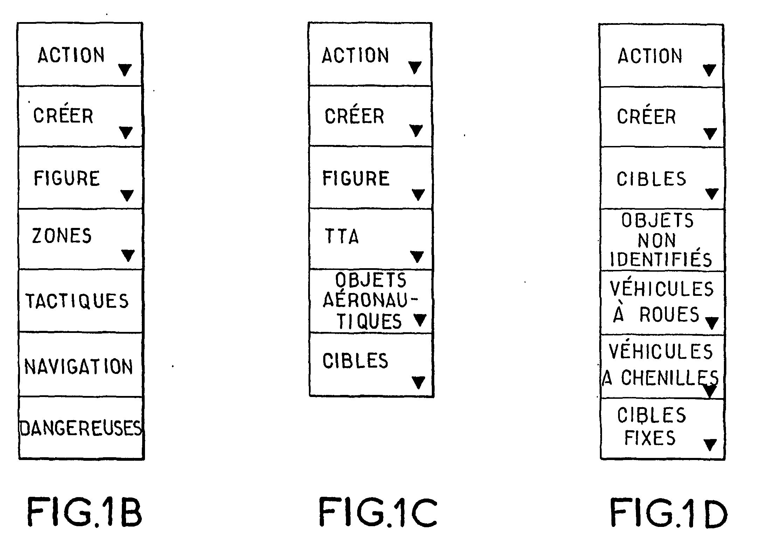

Les figures 1B à 1D représentent schématiquement des exemples de tableaux affichés par le procédé de gestion selon l'invention, après certains clics de l'utilisateur, lorsque l'arborescence est celle de la figure 1A. Les cases qui ne sont pas des extrémités de branche comportent une marque spécifique MS les différenciant des extrémités de branches ; par exemple, la case « Créer » n'est pas une extrémité de branche tandis que la case « Supprimer » est une extrémité de branche.

La figure 1B est le tableau affiché sur l'écran après que l'utilisateur ait successivement cliqué sur les cases « Action », « Créer », « Figure » et « Zones ». Les cases actives sont alors les cases « Tactiques », « Navigation », « Dangereuses ». L'utilisateur sait donc que les cases « Tactiques », « Navigation », « Dangereuses » appartiennent à un même niveau et sont rattachées à la case « Zones » laquelle est rattachée à la case « Figure » (de niveau supérieur, c'est-à-dire plus proche de l'origine de l'arborescence) laquelle est elle-même rattachée à la case « Créer » (de niveau encore supérieur) laquelle est à son tour rattachée à la case « Action » qui est l'origine de l'arborescence. Pour désactiver les cases « Tactiques », « Navigation », « Dangereuses », lorsque celles-ci sont actives, l'utilisateur doit à nouveau cliquer sur la case « Zone » (de niveau immédiatement supérieur).

La figure 1C est le tableau affiché sur l'écran après que l'utilisateur, à partir de l'affichage d'écran de la figure 1B, ait cliqué une seule fois sur la case « Créer ».

La figure 1D est le tableau affiché sur l'écran après que l'utilisateur, à partir de l'affichage d'écran de la figure 1C, ait cliqué une seule fois sur la case « Cibles ».

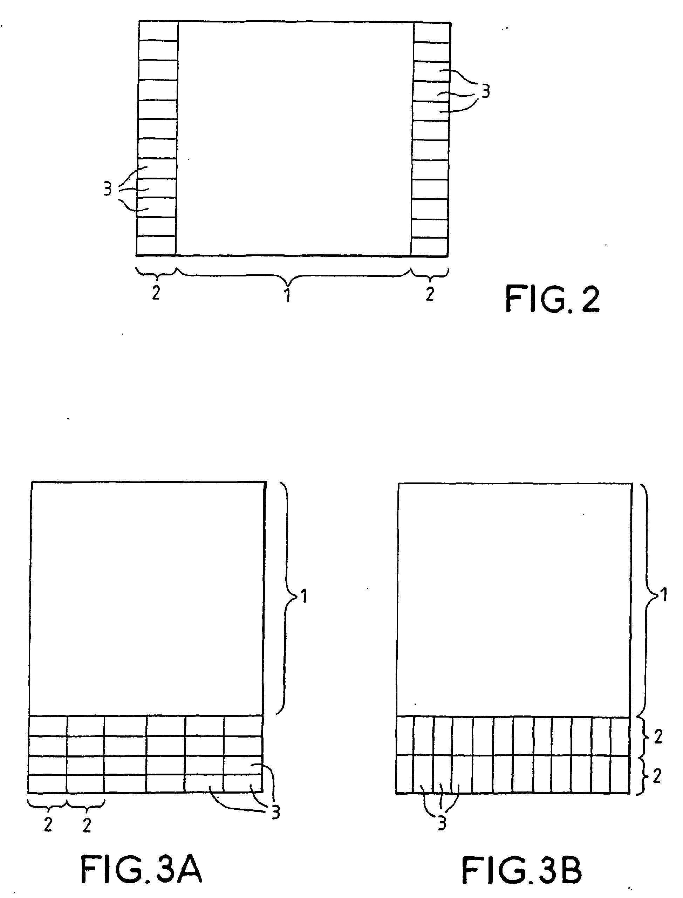

Les figures 2, 3A et 3B représentent des exemples d'allocation d'espaces confinés à des arborescences. Les axes H et L représentent respectivement l'axe des hauteurs et l'axe des largeurs, ces orientations étant données par rapport à l'utilisateur qui regarde l'écran.

La figure 2 représente un affichage de deux arborescences. Chaque arborescence est affichée sur un bandeau vertical 2, les deux bandeaux verticaux 2 étant latéraux par rapport à la carte 1. Par exemple, les deux bandeaux 2 ont chacun la même hauteur que la carte 1, mais ont chacun leur largeur qui est approximativement le sixième de la largeur de la carte 1. Chaque bandeau 2 est un tableau monodimensionnel de cases 3. Chaque bandeau 2 est ici constitué d'une colonne de cases 3. L'affichage de la figure 2 représente avantageusement un affichage d'écran d'un aéronef militaire.

La figure 3A représente un affichage de deux arborescences. Chaque arborescence est affichée sur trois bandeaux verticaux 2, l'une des arborescences sur les trois bandeaux verticaux de gauche et l'autre arborescence sur les trois bandeaux verticaux de droite. L'ensemble des six bandeaux verticaux 2 est situé en dessous de la carte 1. Chaque arborescence est ici représentée dans un espace de taille invariable mais à l'aide d'un tableau pluridimensionnel comportant des cases 3 réparties sur plusieurs lignes et plusieurs colonnes ; c'est pour cela que la figure 3 n'est pas un exemple préférentiel. L'affichage de la figure 3B représente plutôt un affichage d'écran d'un aéronef civil.

La figure 3B représente un affichage de deux arborescences. Chaque arborescence est affichée sur un bandeau horizontal 2, les deux bandeaux horizontaux 2 étant situés en dessous de la carte 1. Par exemple, les deux bandeaux 2 ont chacun la même largeur que la carte 1, mais ont chacun leur hauteur qui est approximativement le sixième de la hauteur de la carte 1. Chaque bandeau 2 est un tableau monodimensionnel de cases 3. Chaque bandeau 2 est ici constitué d'une ligne de cases 3. L'affichage de la figure 3B représente avantageusement un affichage d'écran d'un aéronef civil.

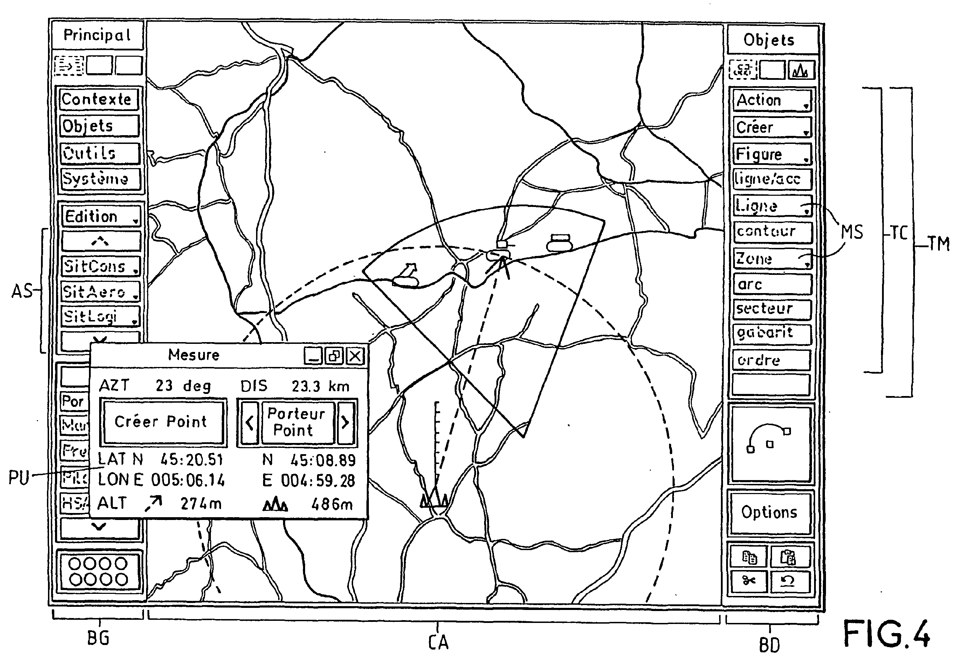

La figure 4 représente, à titre d'illustration, un exemple d'affichage réel sur un écran d'aéronef. La carte CA est entourée de deux bandeaux BG et BD. Un ascenseur AS est visible sur le bandeau BG. Des marques spécifiques MS sont visibles sur les deux bandeaux. Un « pop-up » PU masque une partie de la carte CA ainsi qu'une partie du bandeau BG. Le bandeau gauche comporte, du haut de la figure 4 vers le bas de la figure 4, quatre cases ne constituant pas une arborescence mais permettant le choix de l'affichage sur le bandeau BD d'une arborescence parmi quatre, une arborescence constituée de six cases, sept cases partiellement recouvertes par le « pop-up ». Le bandeau BD affiche une arborescence sous forme de tableau monodimensionnel. La taille maximum du tableau est TM, elle vaut par exemple ici douze cases. La taille courante du tableau est TC, elle vaut par exemple ici onze cases. L'endroit où se trouve l'utilisateur est le niveau immédiatement inférieur à la case « Figure » lequel niveau comporte huit cases qui sont affichées et qui vont de la case « ligne/acc » à la case « ordre ». L'utilisateur a sans doute activé la case « arc », car un arc en traits blancs continus est visible sur la carte CA, mais les nuances claire et foncée pour les cases activées et désactivées ne sont pas visibles sur la figure 4. Sur la figure 4, en plus des marques spécifiques MS sous la forme de petits triangles, les informations contenues dans les extrémités de branche commencent par une minuscule, comme par exemple « arc », tandis que les informations contenues dans les autres cases commencent par une majuscule, comme par exemple « Zones ». Cela peut être utilisé, soit comme un autre moyen, soit comme un moyen supplémentaire (comme sur la figure 4), de distinguer les cases correspondant à des extrémités de branche des autres cases.

## Revendications

1. Procédé de gestion d'une interface homme machine laquelle interface associe un désignateur et un écran d'aéronef et réalise la liaison entre un utilisateur du désignateur et un système cartographique comportant des informations structurées en arborescence sur plusieurs niveaux (N0, N-1, N-2, N-3, N-4) en affichant simultanément sur l'écran une partie seulement desdites informations, chaque passage d'un niveau à un autre lors de l'évolution de l'utilisateur dans l'arborescence requiert au moins un clic, c'est-à-dire une pression sur un bouton du désignateur suivie d'un relâchement dudit bouton, **caractérisé en ce que** ledit procédé peut reconfigurer automatiquement l'arborescence en fonction de la mission de l'utilisateur, ladite reconfiguration rapprochant de l'origine (N0) de l'arborescence les informations particulièrement pertinentes pour ladite mission.

2. Procédé selon la revendication 1, **caractérisé en ce que**, lors d'une évolution de l'utilisateur dans l'arborescence s'éloignant de l'origine (N0) de l'arborescence, le passage direct d'un niveau donné à un autre niveau non contigu au niveau donné est impossible et le passage d'un niveau donné à un autre niveau contigu au niveau donné requiert un seul clic.

3. Procédé selon l'une quelconque des revendications précédentes, **caractérisé en ce que** le procédé maintient l'affichage de tous les niveaux successifs de la branche menant de l'origine (N0) de l'arborescence à l'endroit de l'arborescence où se trouve l'utilisateur et **en ce que** le procédé permet à l'utilisateur de revenir à n'imparte quel niveau voulu parmi les niveaux maintenus affichés en un seul clic sur ledit niveau voulu.

4. Procédé selon la revendication 3, **caractérisé en ce que** le procédé ne maintient l'affichage des niveaux successifs que de la seule branche menant de l'origine (N0) de l'arborescence à l'endroit de l'arborescence où se trouve l'utilisateur.

5. Procédé selon l'une quelconque des revendications précédentes, **caractérisé en ce que** le procédé alloue, sur l'écran, pour l'affichage des informations de l'arborescence, un espace (2) de taille invariable au cours de l'évolution de l'utilisateur dans l'arborescence.

6. Procédé selon la revendication 5, **caractérisé en ce que**, dans l'espace alloué (2), le procédé ne peut afficher les informations que sous la forme d'un tableau monodimensionnel (BG, BD), de plusieurs cases (3) de taille identique, chaque case (3) ne comportant qu'une seule information désignable.

7. Procédé selon la revendication 6, **caractérisé en ce que** le nombre maximal (TM) de cases (3) du tableau (BG, BD) reste inférieur ou égal à vingt.

8. Procédé selon l'une quelconque des revendications 5 à 7, **caractérisé en ce que**, lors du passage à un niveau donné, si le nombre d'informations correspondant au niveau donné est trop important pour être affiché dans l'espace alloué (2), alors le procédé n'affiche qu'une partie des dites informations, ladite partie étant encadrée par les flèches d'un ascenseur (AS), l'affichage de chacune des flèches requérant une case (3), les flèches permettant à l'utilisateur de faire défiler entre lesdites flèches l'intégralité des dites informations.

9. Procédé selon l'une quelconque des revendications précédentes, **caractérisé en ce que** le niveau le plus proche (N-1) de l'origine (N0) de l'arborescence comporte plus d'informations à afficher que chacun (N-4) des niveaux les plus lointains de l'origine de l'arborescence affichant des extrémités de branches.

10. Procédé selon l'une quelconque des revendications précédentes, **caractérisé en ce que** chaque niveau donné d'une branche qui comporte au moins un autre niveau plus éloigné de l'origine (N0) de l'arborescence que le niveau donné est affiché à l'aide d'une marque spécifique (MS) le distinguant des niveaux (N-4) situés à l'extrémité d'une branche.

11. Procédé selon l'une quelconque des revendications précédentes, **caractérisé en ce que** différentes informations qui sont chacune affichée dans une case (3) et qui sont désignables simultanément sont affichées d'une manière à la fois identique entre elles et spécifique des autres.

12. Procédé selon l'une quelconque des revendications précédentes; **caractérisé en ce que** le désignateur associé à l'écran par le procédé est un levier de commande ou une boule roulante ou une surface tactile.

## Patentansprüche

1. Verfahren zur Verwaltung einer Mensch-Maschine-Schnittstelle, wobei die Schnittstelle einen Bezeichner und einen Luftfahrzeugbildschirm vereinigt und die Verbindung zwischen einem Benutzer des Bezeichners und einem kartographischen System herstellt, das in einem Suchbaum in mehreren Ebenen (N0 , N-1, N-2, N-3, N-4) strukturierte Informationen enthält, indem nur ein Teil der Informationen gleichzeitig auf dem Bildschirm angezeigt wird, wobei jeder Übergang von einer Ebene zur anderen bei der Bewegung des Benutzers in dem Suchbaum mindestens einen Klick, d.h. einen Druck auf einen Knopf des Bezeichners, gefolgt von einem Loslassen des Knopfes, erfordert, **dadurch gekennzeichnet, dass** das Verfahren den Suchbaum in Abhängigkeit von der Aufgabe des Benutzers automatisch rekonfigurieren kann, wobei die Rekonfiguration die für die Aufgabe besonders zutreffenden Informationen dem Ursprung (N0) des Suchbaums annähert.

2. Verfahren nach Anspruch 1, **dadurch gekennzeichnet, dass** bei der Bewegung des Benutzers im Suchbaum, indem er sich vom Ursprung (N0) des Suchbaums entfernt, der direkte Übergang von einer gegebenen Ebene zu einer anderen, nicht an die gegebene Ebene angrenzenden Ebene unmöglich ist, und der Übergang von einer gegebenen Ebene zu einer anderen, an die gegebene Ebene angrenzenden Ebene nur einen einzigen Klick erfordert.

3. Verfahren nach einem der vorhergehenden Ansprüche, **dadurch gekennzeichnet, dass** das Verfahren die Anzeige aller aufeinanderfolgenden Ebenen des Zweigs aufrechterhält, der vom Ursprung (N0) des Suchbaums bis zu der Stelle des Suchbaums führt, wo sich der Benutzer befindet, und dass das Verfahren es dem Benutzer ermöglicht, mit einem einzigen Klick auf die gewünschte Ebene auf eine beliebige gewünschte unter den angezeigten Ebenen Ebene zurückzukehren.

4. Verfahren nach Anspruch 3, **dadurch gekennzeichnet, dass** das Verfahren die Anzeige der aufeinanderfolgenden Ebenen nur des Zweigs aufrechterhält, der vom Ursprung (N0) des Suchbaums bis zu der Stelle des Suchbaums führt, wo sich der Benutzer befindet.

5. Verfahren nach einem der vorhergehenden Ansprüche, **dadurch gekennzeichnet, dass** das Verfahren zur Anzeige der Informationen des Suchbaums auf dem Bildschirm einen Raum (2) mit einer Größe zuteilt, die während der Bewegung des Benutzers im Suchbaum unveränderlich ist.

6. Verfahren nach Anspruch 5, **dadurch gekennzeichnet, dass** das Verfahren die Informationen im zugeteilten Raum (2) nur in Form einer eindimensionalen Tabelle (BG, BD) von mehreren Feldern (3) gleicher Größe anzeigen kann, wobei jedes Feld (3) nur eine einzige bezeichenbare Information enthält.

7. Verfahren nach Anspruch 6, **dadurch gekennzeichnet, dass** die maximale Anzahl (TM) von Feldern (3) der Tabelle (BG, BD) unter oder gleich zwanzig bleibt.

8. Verfahren nach einem der Ansprüche 5 bis 7, **dadurch gekennzeichnet, dass** beim Übergang auf eine gegebene Ebene, wenn die Anzahl von Informationen entsprechend der gegebenen Ebene zu groß ist, um im zugeteilten Raum (2) angezeigt zu werden, das Verfahren nur einen Teil der Informationen anzeigt, wobei dieser Teil von den Pfeilen eines Elevators (AS) umrahmt ist, wobei die Anzeige jedes der Pfeile ein Feld (3) erfordert, wobei die Pfeile es dem Benutzer ermöglichen, zwischen den Pfeilen die Gesamtheit der Informationen durchlaufen zu lassen.

9. Verfahren nach einem der vorhergehenden Ansprüche, **dadurch gekennzeichnet, dass** die dem Ursprung (N0) des Suchbaums am nächsten liegende Ebene (N-1) mehr anzuzeigende Informationen enthält als jede der am weitesten vom Ursprung des Suchbaums entfernten Ebenen (N-4), die Zweigenden anzeigen.

10. Verfahren nach einem der vorhergehenden Ansprüche, **dadurch gekennzeichnet, dass** jede gegebene Ebene eines Zweigs, der mindestens eine weitere Ebene aufweist, die weiter vom Ursprung (N0) des Suchbaums entfernt ist als die gegebene Ebene, mit Hilfe einer spezifischen Marke (MS) angezeigt wird, die sie von den Ebenen (N-4) unterscheidet, die sich am Ende eines Zweigs befinden.

11. Verfahren nach einem der vorhergehenden Ansprüche, **dadurch gekennzeichnet, dass** verschiedene Informationen, die je in einem Feld (3) angezeigt sind und die gleichzeitig bezeichnet werden können, auf eine untereinander identische und zu den anderen spezifische Weise angezeigt werden.

12. Verfahren nach einem der vorhergehenden Ansprüche, **dadurch gekennzeichnet, dass** der dem Bildschirm durch das Verfahren zugeordnete Bezeichner ein Steuerhebel oder eine Rollkugel oder eine berührungsempfindliche Fläche ist.

## Claims

1. Process for managing a man-machine interface, which interface associates a designator and an aircraft screen and effects the link between a user of the designator and a mapping system comprising information structured as a tree on several levels (N0, N-1, N-2, N-3, N-4) by simultaneously displaying on the screen just part of said information, each switch from one level to another during the user's progress through the tree requires at least one click, that is to say a press of a button of the designator, followed by a release of said button, **characterized in that** the process can automatically reconfigure the tree as a function of the user's mission, said reconfiguration bringing the information particularly relevant to said mission closer to the origin (N0) of the tree.

2. Process according to Claim 1, **characterized in that**, during the user's progress through the tree taking him away from the origin (N0) of the tree, the direct switch from a given level to another level not contiguous with the given level is impossible and the switch from a given level to another level contiguous with the given level requires a single click.

3. Process according to either of the preceding claims, **characterized in that** the process maintains the displaying of all the successive levels of the branch leading from the origin (N0) of the tree to the location of the tree at which the user is situated and **in that** the process enables the user to return to any desired level from among the levels maintained displayed in a single click on said desired level.

4. Process according to Claim 3, **characterized in that** the process maintains the displaying of the successive levels of just the single branch leading from the origin (N0) of the tree to the location of the tree at which the user is situated.

5. Process according to any one of the preceding claims, **characterized in that** the process allots, on the screen, for the displaying of the information of the tree, a space (2) of size which is invariable in the course of the user's progress through the tree.

6. Process according to Claim 5, **characterized in that**, in the allotted space (2), the process can display the information only in the form of a one-dimensional array (BG, BD), of several boxes (3) of identical size, each box (3) comprising just one designatable item of information.

7. Process according to Claim 6, **characterized in that** the maximum number (TM) of boxes (3) of the array (BG, BD) remains less than or equal to twenty.

8. Process according to any one of Claims 5 to 7, **characterized in that**, when switching to a given level, if the number of items of information corresponding to the given level is too big to be displayed in the allotted space (2), then the process displays only part of said information, said part being flanked by arrows of a scrollbar (AS), the displaying of each of the arrows requiring a box (3), the arrows enabling the user to make all of said information scroll between said arrows.

9. Process according to any one of the preceding claims, **characterized in that** the level (N-1) closest to the origin (N0) of the tree comprises more information to be displayed than each (N-4) of the levels furthest from the origin of the tree displaying branch ends.

10. Process according to any one of the preceding claims, **characterized in that** each given level of a branch which comprises at least one other level further away from the origin (N0) of the tree than the given level is displayed with the aid of a specific mark (MS) distinguishing it from the levels (N-4) situated at the end of a branch.

11. Process according to any one of the preceding claims, **characterized in that** the various items of information which are each displayed in a box (3) and which are designatable simultaneously are displayed in a manner which is at one and the same time identical for each of them and specific from the others.

12. Process according to any one of the preceding claims, **characterized in that** the designator associated with the screen by the process is a control lever or a trackball or a touch surface.
